Europäisches Patentamt

European Patent Office

Office européen des brevets

(11) Publication number: **0 159 535**
**B1**

(12)   **EUROPEAN PATENT SPECIFICATION**

(45) Date of publication of patent specification: **20.07.88**

(51) Int. Cl.⁴: **C 02 F 3/28, C 02 F 3/30**

(21) Application number: **85103204.5**

(22) Date of filing: **19.03.85**

(54) **Septic tank.**

(30) Priority: **10.04.84 JP 71471/84**

(43) Date of publication of application:
**30.10.85 Bulletin 85/44**

(45) Publication of the grant of the patent:
**20.07.88 Bulletin 88/29**

(84) Designated Contracting States:
**DE FR GB IT SE**

(56) References cited:
**DE-A-1 908 485**
**US-A-1 641 800**
**US-A-3 741 393**
**US-A-4 422 930**

(73) Proprietor: **NIPPON SANGYO KIKAI KABUSHIKI KAISHA**
**No. 9-9, Nihonbashi Koami-Cho**
**Chuo-Ku Tokyo (JP)**

(72) Inventor: **Suzuki, Kensuke**
**No. 55-16 Tokumaru 1-Chome**
**Itabashi-Ku Tokyo (JP)**
Inventor: **Okada, Sunao**
**No. 14-6, Koshien Sanban-Cho**
**Nishinomiya-Shi Hyogo (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

Courier Press, Leamington Spa, England.

## Description

The present invention relates to a septic tank, and particularly to a small-sized household septic tank for general waste water disposal.

DE—A—1908485 discloses a sewage plant having an inlet positioned higher than the outlet and partition walls, which partition walls are provided with overflow pipes.

US—A—1 641 800 discloses a septic tank having an inlet positioned higher than the outlet and porous partitions dividing said tank into several compartments, inverted U-shaped pipes are set across said partitions, both ends of each pipe being immersed in the sewage.

Miscellaneous waste water discharged from each home has been a main factor which causes the corruption and pollution of water in rivers and lakes and marshes, and a household septic tank is provided for treating said water in a combined manner. In the combined disposal of the waste water discharged in each home, raw sewage and the water used for cooking, washing and bathing are treated collectively. The quantity of waste water is related closely to daily life. The water used for bath or washing, for instance, is discharged in a large quantity at a time, and thus can not possibly be treated by a small septic tank. Therefore, the waste water which has not been completely treated is forced out partly from the tank on each occasion of discharge, and consequently uniform purification treatment is impossible. This phenomenon of discharge in a large quantity appears very often at about 10 in the morning and in the evening, in particular, whereas in the time zones subsequent thereto, only a very small quantity of waste water is discharged, thus uniform treatment of discharged water in large and then small quantities being repeated.

In view of the problem described above, the present invention aims to obtain a septic tank in which the main body thereof is partitioned into inflow and outflow sides by a partition wall so that the level of water on the inflow side can be maintained higher enough than that on the outflow side, while a siphon tube is set across the partition wall so that the inflow side is communicated thereby with the outflow side, thus the waste water in a large quantity being reserved temporarily at its peak on the inflow side and then transferred gradually onto the outflow side during a time zone other than said peak through said siphon tube so that the flow rate of the water in the main body of the tank can be controlled so as to insure uniformity of the quality of the treated water.

The septic tank of the present invention comprises the main body of the tank, the partition wall which partitions said main body of the tank into the inflow and outflow sides so that the level of water on the inflow side can be maintained higher enough than that on the outflow side, and the siphon tube which is set across said partition wall, with one end thereof inserted into a space on the inflow side and the other opened above the surface of water on the outflow side. By this construction, waste water in a large quantity which is discharged at a time into the space on the inflow side is reserved therein and then transferred gradually through the siphon tube into a space on the outflow side.

Other objects and characteristics of the present invention will be made apparent with descriptions of drawings.

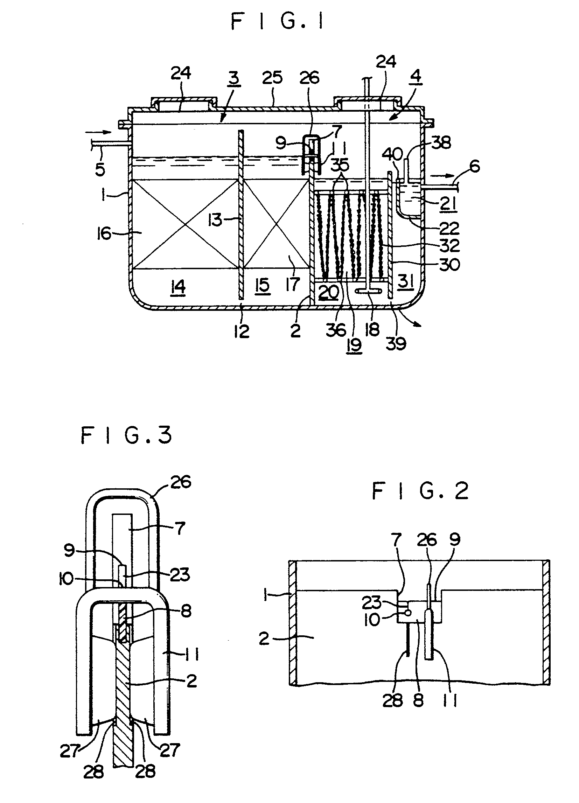

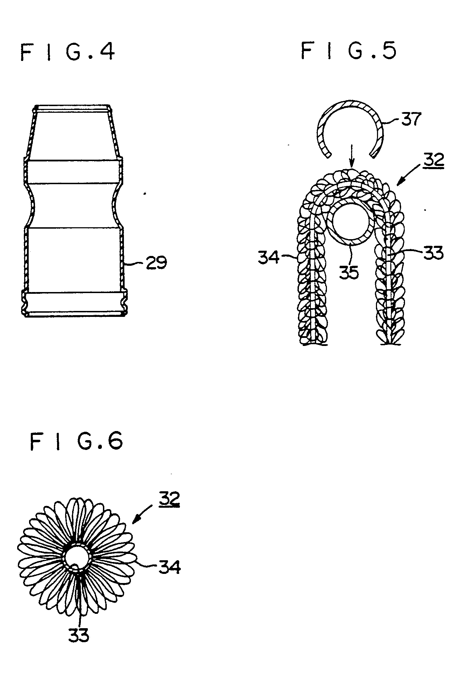

Figure 1 shows a longitudinal sectional view of an apparatus which is one embodiment of the present invention; Figure 2 shows a front view of a part of a partition wall of said apparatus; Figure 3 shows an enlarged front view of a portion to which a siphon tube is fitted; Figure 4 shows a longitudinal front view of an anaerobic filter bed catalytic material; Figure 5 shows a front view of a cord-shaped catalytic material in the fitted state; and Figure 6 shows a transverse plan view of the cord-shaped catalytic material.

One embodiment of the present invention will be described hereunder with reference to the attached drawings of Figures 1 to 6.

Numeral 1 denotes a main body of a tank, which is partitioned into an inflow side 3 and an outflow side 4 by a partition wall 2. A sewage inflow pipe 5 communicates with the inflow side 3, while a treated-water outflow pipe 6 communicates with the outflow side 4 at a position which is lower by a sufficient height than a position at which said pipe 5 communicates with the inflow side 3. The upper surface of the main body 1 of the tank is tightly closed by a cover 25 provided with manholes 24. A cut 7 is formed in a part of the upper end of the partition wall 2, and an overflow dam 9 is formed in the cut 7, while an overflow board 8 which is formed of soft resin, rubber or the like and is somewhat lower than the upper end of the partition wall 2 is fitted to said overflow dam 9. The overflow board 8 has a through hole 10 which is provided with a slit 23 cut in from the upper end of the dam, and an inverse-U-shaped siphon tube 11 is inserted through said through hole 10. The upper end of the slit 23 is rounded so that the siphon tube 11 can be inserted easily. One end of the siphon tube 11 is inserted into the water on the inflow side 3, while the other end thereof is opened above the surface of the water on the outflow side 4. To the upper end of the siphon tube 11 a handle 26 is fitted in such a manner that it projects above the partition wall 2, while inside the siphon tube 11 guide fins 27 are provided symmetrically, and these fins 27 are inserted into guide grooves 28 formed on both surfaces of the partition wall 2, respectively. The space on the inflow side of the main body 1 of the tank is further parted into a first anaerobic treatment chamber 14 and a second anaerobic treatment chamber 15 by a partition board 13 which has a transfer path 12 at the lower end. Inside the anaerobic treatment chambers 14 and 15, anaerobic filter beds 16 and 17 (comprising wire nets laid above and below and a large number of short-pipe-shaped synthetic resin catalytic materials 29 as shown by Figure 4 which are packed at random between said upper and lower wire nets) are formed, and anaerobic sludge containing a large quantity of anaerobic bacteria such as methane bacteria is retained in these beds. The space on the outflow side 4 of the main body 1 of the tank is divided into an aerobic treatment chamber 20 and a settling chamber 31 in which the outflow pipe 6 is opened, by a partition board 30 provided with a transfer path 39 at the lower end. In the aerobic treatment chamber 20 an aerobic immersion filter bed 19 is formed by a large number of cord-shaped catalytic materials 32 which are stretched in the vertical direction. As shown in Figures 5 and 6, the cord-shaped catalytic materials 32 are formed in such a manner that a large number of ring-shaped fibers 34 are provided projecting from and integral with the circumference of a core material 33 formed of a netted string of synthetic fibers. These cord-shaped catalytic materials 32 are stretched between upper and lower supporting rods 35, 36 which are provided in large numbers at upper and lower positions in the water in the aerobic treatment chamber 20, and said cord-shaped catalytic materials 32 are fixed at the positions at which they are supported by said rods, by fastening pipes 37 each of which has an opening extending in the axial direction and is put on each of said materials 32. An air diffusing pipe 18 through which air is supplied from the outside of the main body 1 of the tank is inserted into a space under the aerobic immersion filter bed 19 formed as described above, and air is supplied from said air diffusing pipe 18 into an aerobic sludge sticking to the string-shaped catalytic materials 32 for catalytic oxidation treatment. In the settling chamber 31 a sterilizing chamber 21 is formed around the opening of the outflow pipe 6, the enclosure wall of the sterilizing chamber 21 being formed somewhat higher than the position of the opening of the outflow pipe 6, an overflow port 40 for the water flowing over from the settling chamber 31 being cut in the upper part of the enclosure wall 22, and an agent tube 38 being inserted into the sterilizing chamber 21.

A spare through hole 10 is formed in the overflow board 8. This hole is shut ordinarily.

Next, the operation of the above-described embodiment will be described below.

The sludge which flows into the main body 1 of the tank through the inflow pipe 5 flows down through the first anaerobic treatment chamber 14, and in this course, it is subjected to anaerobic treatment by the anaerobic immersion filter bed 16. Then, the sludge is transferred into the second anaerobic treatment chamber 15 through the transfer path 12 provided at the bottom, and in the course of flowing upward through said treatment chamber 15, it undergoes anaerobic treatment again in the anaerobic immersion filter bed 17. When the level of the water in the treatment chamber 15 rises above the siphon tube 11 on the overflow dam 9, the water subjected to the anaerobic treatment is sucked up from the lower end of the siphon tube 11 by the effect of the siphonage thereof and transferred into the aerobic treatment chamber 20. This transfer continues until the water level in the anaerobic treatment chambers 14 and 15 falls down to the lower end of the siphon tube 11, and when the transfer of the water through the siphon tube 11 is ended, a sufficient space is formed above the anaerobic treatment chambers 14 and 15. When the water used for and discharged from a bath or the like flows, in a large quantity, into the tank, it is reserved on the inflow side, since there is a space sufficient for containing a large quantity of inflow water at a time there as described above. Consequently, the sludge which is not treated still is prevented from flowing directly onto the outflow side and further being discharged outside therefrom. More particularly, the waste water flowing into the tank in a large quantity at a time is reserved on the inflow side 3, and simultaneously when the level of the water rises above the top portion of the siphon tube 11, the siphonage becomes effective, thus the water is transferred onto the outflow side 4 through the siphon tube 11. When an extremely large quantity of water flows into the tank, it happens that part of the water overflows the upper part of the siphon tube 11 and flows from the overflow dam 9 onto the outflow side 4. However, this does not affect seriously the operation of the aerobic treatment chamber 20 in which the treatment is performed constantly at a uniform flow rate, and thereafter, all the water being transferred through the siphon tube 11, uniform treatment is carried out at a uniform flow rate. Next, in the aerobic treatment chamber 20 on the outflow side 4, air is diffused and supplied sufficiently from the air diffusing pipe 18 in the lower part to the liquid flowing through the string-shaped catalytic materials 32 so that aerobic treatment can be performed. The water thus treated enters the settling chamber 31 through the transfer path 39 at the bottom and subjected to settling treatment. Then, a supernatant fluid thus obtained flows from the overflow port 40 of the enclosure wall 22 into the sterilizing chamber 21 and, after being sterilized, flows out through the outflow pipe 6.

The deposited sludge formed in the anaerobic treatment chambers 14 and 15, the aerobic treatment chamber 20 and the settling chamber 31 is sucked up to be removed by suction hoses which are inserted through the manholes 24.

To set the siphon tube 11 in place, it is pushed into the slit 23 of the overflow board 8 with the handle 26 gripped by a hand. Then the overflow board 8 is deformed elastically, and thus the siphon tube 11 can be fitted in the through hole 10. With the fins 27 of the siphon tube 11 guided by the guide grooves 28 formed on both surfaces of the partition wall 2, the siphon tube 11 can be fitted to the overflow board 8 without being inclined. When the siphon tube 11 is clogged with scale sticking thereto, the tube is pulled up from the overflow board 8 with the handle 26 gripped, and another siphon tube 11 is pushed into the overflow board 8 with a handle 26 gripped. In this way, the person replacing siphon tube 11 can replace the tube without putting his hand into the water, and the replacement task can be simply performed. The siphon tube 11 must normally be rinsed every one or two months depending on the quality of the treated water.

According to the present invention, the septic tank is constructed principally by the main body of the tank, the partition wall which partitions said main body into the inflow and outflow sides so that the level of water is maintained higher enough on the inflow side than on the outflow side, and the siphon tube which is provided across said partition wall, with one end inserted into the space on the inflow side and the other opened above the surface of water on the outflow side. In this construction, the sludge flowing onto the inflow side is transferred across the partition wall onto the outflow side by the siphon tube. Since there is a sufficient space corresponding to the rise portion of the siphon tube on the inflow side, it does not occur that a large quantity of water not yet treated is transferred onto the outflow side, even when a large quantity of waste water flows into the tank at a time. Moreover, even if part of the water overflows the partition wall, the water is transferred gradually at a uniform flow rate onto the outflow side thereafter by the siphon tube, and thus steady treatment can be performed both on the inflow and outflow sides. This enables the settlement of the problem in the collective treatment of waste water in each home, of which a large fault is unsteady discharge. In addition, the apparatus can be easily maintained and controlled, since the cardinal device thereof is constructed only by setting the siphon tube across the partition wall.

## Claim

A septic tank comprising a main body (1) of a tank, a partition wall (2) for partitioning said main body (1) of the tank into an inflow side (3) for anaerobic treatment and an outflow side (4) for aerobic treatment, an outflow pipe (6), which is positioned lower than the inflow pipe (5) so to maintain the level of water higher on the inflow side (3) than on the outflow side (4), and a siphon tube (11) which is set across said partition wall (2), its one end being inserted into the water on the inflow side (3) while its other end opens above the surface of water on the outflow side (4) so to reserve a space on said inflow side (3) for accommodating excess influent loads.

## Patentanspruch

Faulgrube mit einem Hauptbehälter (1) eines Tankes, mit einer Trennwand (2), die den Hauptbehälter (1) des Tankes in eine Einfließseite (3) zur anaerobischen Behandlung und in eine Ausfließseite (4) zur aerobischen Behandlung unterteilt, mit einer Ausfließleitung (6), die unterhalb der Einfließleitung (5) angeordnet ist, so daß sie den Wasserstand auf der Einfließseite (3) höher als auf der Ausfließseite (4) hält, und mit einer Siphonröhre (11), die über die Trennwand (2) gelegt ist, wobei ein Ende der Röhre in das Wasser auf der Einfließseite (3) eingetaucht ist, während das andere Ende oberhalb der Wasseroberfläche auf der Ausfließseite (4) öffnet, so daß auf der Einfließseite (3) ein Raum zur Aufnahme von übermäßig einfließendem Schmutzwasser verbleibt.

## Revendication

Fosse septique comprenant un corps principal de fosse (1), une cloison (2) qui divise ledit corps principal (1) de la fosse en un côté d'arrivée (3), destiné au traitement anaérobie, et un côté de départ (4), destiné au traitement aérobie, un tuyau de départ (6) qui est placé plus bas que le tuyau d'arrivée (5), de manière à maintenir le niveau de l'eau plus haut sur le côté d'arrivée (3) que sur le côté de départ (4), et un tube de siphon (11) qui est disposé en travers de ladite cloison (2), une extrémité de ce tube étant plongée dans l'eau contenue sur le côté d'arrivée (3) tandis que son autre extrémité débouche au-dessus de la surface de l'eau contenue sur le côté de départ (4), de manière à maintenir sur ledit côté d'arrivée (3) un espace libre capable de contenir des charges affluentes excessives.

0 159 535

F I G . I

F I G . 3

F I G . 2

1

# F I G.4

29

# F I G.5

37

32

34

35

33

# F I G.6

32

34

33